# EUROPEAN PATENT APPLICATION

(11) **EP 1 557 225 A1**
(43) Date of publication of application: **27.07.2005**
(21) Application number: 03769913.9
(22) Date of filing: 21.10.2003
(51) Int. Cl.: B09C 1/02, B09C 1/04, C02F 1/24, C02F 1/62

(54) **METHOD FOR CLARIFYING SOIL**

(30) Priority: 24.10.2002 JP 2002309395
(71) Applicant: Teijin Fibers Limited, Osaka-shi, Osaka 541-0054 (JP)
(72) Inventor: NAKATA, Toru, c/o Teijin Fibers Ltd. Matsuyama Ft., Ehime 791-8041 (JP); HORIUCHI, H., c/o Teijin Fibers Ltd. Matsuyama Ft., Ehime 791-8041 (JP)
(74) Representative: Hallybone, Huw George
(86) International application number: PCT/JP2003/013437
(87) International publication number: WO 2004/037453

(57) **Abstract**

A process for cleaning contaminated soil containing a heavy metal, comprising:
(a) an extraction step where extracting the heavy metal contained in the soil as a heavy metal ion by bringing an extracting reagent into contact with the soil to obtain an extract "a" containing soil and the heavy metal ion;
(b) a solid-liquid separation step where carrying out the solid-liquid separation of the extract "a" to obtain cleaned soil and an extract "b" containing the heavy metal ion;
(c) a precipitation step where adjusting the pH of the extract "b" to 3 or more in the presence of an iron ion to precipitate the heavy metal together with ion so as to obtain an extract "c" containing iron and heavy metal precipitates; and
(d) a heavy metal recovery step where foaming the extract "c" in the presence of a surfactant and collecting the iron and heavy metal precipitates by bubbles to recover them.

The process can remove a heavy metal from the polluted soil containing the heavy metal efficiently.

## Description

### Field of the Invention

The present invention relates to a process for cleaning contaminated soil containing a heavy metal. More specifically, it relates to a process for removing a heavy metal from soil containing the heavy metal.

### Description of the Prior Art

Along with an increase in the number of investigations for the re-development of urban districts, more and more cases where the sites of demolished factories and the like are polluted by heavy metals are reported. In Japan, due to the enforcement of the Soil Pollution Control Law in 2002, the prevention of soil pollution was legislated, and standards for the amounts of heavy metals such as cadmium, lead and mercury eluted from soil and the contents of these heavy metals in soil were set. Therefore, the number of treatment cases such as the removal of contaminants is expected to grow significantly in the future.

A general countermeasure against soil pollution by a heavy metal which is currently taken is to cut off sources of pollution from the surrounding environment, such as insolubilization, refilling with cleaned soil and cutting off water. Since a heavy metal component which is a source of pollution remains on-site in these methods, pollution may be caused by the re-elution of the heavy metal due to an environmental change. Therefore, the property value of land may be impaired and it cannot be said that these methods are preferred from the viewpoint of saving rare resources.

From this point of view, the introduction of soil cleaning processes which are now being implemented in Europe and America are now under study. These known soil cleaning processes include (1) contaminated soil washing with a classification method, (2) soil cleaning with a froth flotation method,(3) technology for heat treating heavy metal contaminated soil, (4) contaminated soil cleaning with a vapor heating method, (5) chlorination volatilization method and (6) cleaning of heavy metal contaminated soil by electrophoresis (see non-patented document 1).

Out of the above processes, contaminated soil washing with a classification method (1) is to remove water-soluble contaminants by dissolution, especially fine particles to which a heavy metal is easily adsorbed while sorting soil in order to take out soil separated from the heavy metal. As an example of this process, there is proposed a method in which an alkali metal halide and an acid are added to soil contaminated with a heavy metal to prepare a weak acid aqueous solution so that the heavy metal is removed into the weak acid aqueous solution (see patent document 1).

Soil cleaning with a froth flotation method (2) is also called "ore flotation method" in which particles having a hydrophobic surface are adhered to froth formed by bubbling to come up to the surface and be separated. Although this technique is effective for sulfides of a heavy metal having a hydrophobic surface, as heavy metal-containing particles contained in general soil do not always have a hydrophobic surface, they may not be separated by this conventional ore flotation method.

The technology for heat treating heavy metal contaminated soil (3) is to remove a heavy metal which is easily volatilized by heating at about 1,000°C from heavy metal-containing soil while air is supplied into the soil. Although this technology is effective as a soil treating technology for combined pollution of soil with an organic substance, it involves many problems to be solved such as: a heavy metal which does not volatilize and is easily molten cannot be treated; an exhaust gas containing a heavy metal must be treated; heated soil significantly changes from the original soil in properties, thereby making it difficult to bury it back; when water is used for cooling and collection in the treatment of an exhaust gas, the treatment of effluent is required; and since a toxic substance may be produced unintentionally due to strong heat, special care must be taken.

Contaminated soil cleaning with a vapor heating method (4) is to volatilize a heavy metal by blowing heated vapor into the soil while the soil is heated so as to separate the heavy metal from the soil. Although this technology is excellent in the separation efficiency of a heavy metal and has fair possibility of burying the soil back, a heating source for supplying heated vapor is necessary, the treatment of an exhaust gas and condensed water is required, and a heavy metal which is hardly volatilized cannot be separated.

The chlorination and volatilization method (5) is a technology for volatilizing and separating a heavy metal by heating soil at 800 to 1, 000° C after an aqueous solution of calcium chloride is added to the soil to change the heavy metal contained in the soil into a chloride to reduce its boiling point. This technology also involves the following problems like the above heat treating method and vapor heating method such as: the treatment of an exhaust gas is necessary; the treatment of water used for the treatment of the exhaust gas is required; and a toxic substance may be produced unintentionally by heating.

The cleaning of heavy metal contaminated soil by electrophoresis (6) is a technology for recovering a metal condensed at a positive electrode by filling water into gaps in soil and applying a DC current so that a heavy metal anion moves to the positive electrode. In this technology, the removal speed is slow and it takes time to remove the heavy metal although it can be extracted on the spot. When a large amount of a chlorine ion is contained in soil, the generation of a chlorine gas is expected.
(non-patented document 1)
"Standards for investigation and guidelines for the pollution of soil and underground water" edited by the Water Quality Bureau of the Environment Agency, pp. 51-53, 1999
(patent document 1)
JP-A 2002-355662 (the term "JP-A" as used herein means an "unexamined published Japanese patent application") (laid open on December 10, 2002)

### Summary of the Invention

It is an object of the present invention which has been made in view of the above problems of the prior art to provide a process for removing efficiently a heavy metal from contaminated soil containing the heavy metal and recovering it. It is another object of the present invention to obtain cleaned soil which satisfies the environmental standards and rarely experiences the elution of a heavy metal. It is still another object of the present invention to provide a process for cleaning contaminated soil to satisfy the environmental standards and reducing the content of a heavy metal in effluent from the process.

The inventors of the present invention have conducted intensive studies in view of the above prior art and have found that contaminated soil can be efficiently cleaned by extracting a heavy metal from contaminated soil containing the heavy metal as an ion, precipitating the extracted heavy metal ion together with an iron ion, and collecting the resulting precipitates by bubbles. Thus, the present invention has been accomplished based on this finding.

That is, the present invention is a process for cleaning contaminated soil containing a heavy metal, comprising:
(a) an extraction step where extracting the heavy metal contained in the soil as a heavy metal ion by bringing an extracting reagent into contact with the soil to obtain an extract "a" containing soil and the heavy metal ion;
(b) a solid-liquid separation step where carrying out the solid-liquid separation of the extract "a" to obtain cleaned soil and an extract "b" containing the heavy metal ion;
(c) a precipitation step where adjusting the pH of the extract "b" to 3 or more in the presence of an iron ion to precipitate the heavy metal together with ion so as to obtain an extract "c" containing iron and heavy metal precipitates; and
(d) a heavy metal recovery step where foaming the extract "c" in the presence of a surfactant and collecting the iron and heavy metal precipitates by bubbles to recover them.

### Brief Description of the Drawings

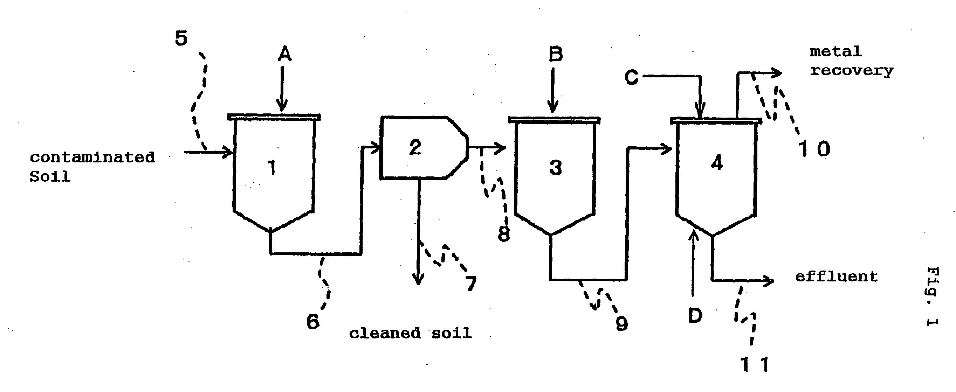

Fig. 1 is a schematic diagram of a process according to a first embodiment of the present invention, wherein the reference symbols denote the following elements: 1 extractor, 2 solid-liquid separator, 3 pH modifier, 4 flotation apparatus, 5 route, 6 route, 7 route, 8 route, 9 route, 10 route, 11 route, A extracting reagent, B alkali agent, C surfactant, D gas; and

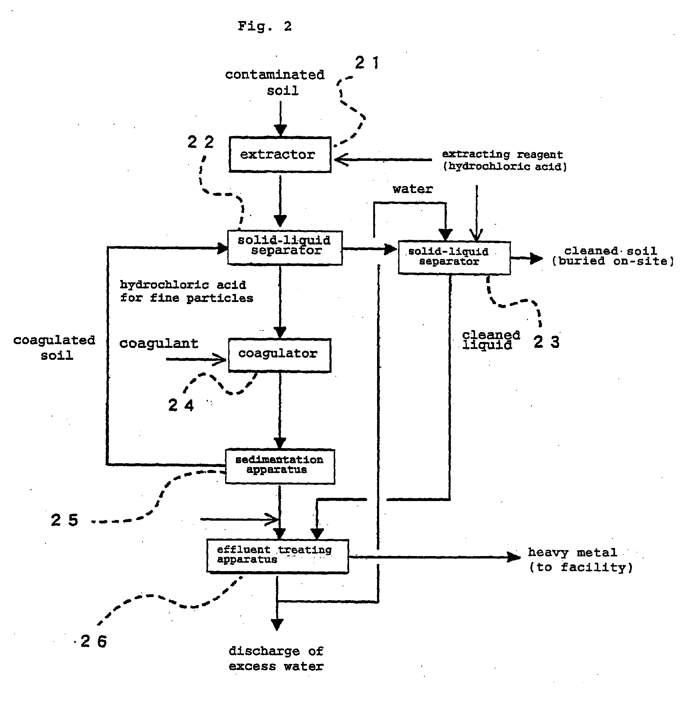

Fig. 2 is a schematic diagram of a process according to a second embodiment of the present invention, wherein the reference symbols denote the following elements: 21 extractor, 22 solid-liquid separator, 23 solid-liquid separator, 24 coagulator, 25 sedimentation apparatus, 26 effluent treating apparatus.

### Best mode of the Preferred Embodiments

The present invention will be described in detail hereinunder.

The object to be cleaned in the present invention is contaminated soil containing a heavy metal. The heavy metal in the present invention is a metal having a specific gravity of 4 or more. Examples of the heavy metal include iron, cadmium, copper, antimony, lead, arsenic, chromium, mercury and zinc. These heavy metals are contained in soil as ions, oxides, hydroxides, etc.

### (extraction step)

This step is to obtain an extract "a" containing soil and a heavy metal ion by bringing an extracting reagent into contact with contaminated soil to extract a heavy metal contained in the soil as a heavy metal ion.

The contaminated soil to be treated is used as it is or after it is ground into fine particles with a grinder. As the grinder may be used a conventional grinder, for example, high-speed rotary impact grinder, autogenous grinder or ball mill.

As the extracting reagent may be used an acid aqueous solution. The concentration of the acid aqueous solution is 0.01 to 15 N, preferably 0.1 to 5 N. Examples of the acid include sulfuric acid, nitric acid and hydrochloric acid. Out of these, a hydrochloric acid aqueous solution is preferred. Hydrochloric acid having a fluorine atom content of 0.1 to 5 ppm, specifically 0.5 to 2 ppm is preferred. The weight ratio (E/S) of the extracting reagent (E) to soil (S) is preferably 0.7 to 10, more preferably 1 to 5.

In the extraction step, after the soil is brought into contact with the extracting reagent, they are preferably stirred or shaken. In this step, the extract "a" containing soil and the heavy metal ion is obtained.

### (solid-liquid separation step)

This step is to obtain cleaned soil and an extract "b" containing the heavy metal ion by carrying out the solid-liquid separation of the extract "a".

The solid-liquid separation may be carried out with a centrifugal filter, drum filter, YOUNG FILTER, filter press or belt press, all of which are generally used. To further recover the heavy metal contained in the remained liquid in the separated solid, cleaning with an acid and water and solid-liquid separation may be repeated after the above solid-liquid separation. The obtained cleaning liquid containing the heavy metal ion is preferably recovered. The soil having a reduced total content of the heavy metal can be discharged as cleaned soil. The water content of the cleaned soil is preferably 40 to 60 %. The extract "b" containing the heavy metal ion is supplied to the subsequent step.

In the present invention, the solid-liquid separation is preferably carried out in the following manner that the fine particles of the soil are distributed to liquid side, to increase the throughput in the solid-liquid separation step (b).

That is, the solid-liquid separation step preferably consists of the following substeps:
(b-1) carrying out the solid-liquid separation of the extract "a" so as to obtain cleaned soil and an extract "b-1" containing the heavy metal ion and fine particles of the soil;
(b-2) coagulating the extract "b-1" to obtain an extract "b-2" containing agglomerated particles and the heavy metal ion; and
(b-3) carrying out the solid-liquid separation of the extract "b-2" so as to obtain solid matter consisting of agglomerated particles and an extract "b" containing the heavy metal ion.

The substep (b-1) is to carry out the solid-liquid separation of the extract "a" in order to obtain cleaned soil and the extract "b-1" containing the heavy metal ion and fine particles of the soil. Fine particles of the soil contained in the extract "b-1" preferably have a particle diameter of 100 µm or less. The method of distributing the fine particles to liquid side is arbitrary. For example, the mesh of the filter of a separator is made large. The heavy metal contained in the soil can be efficiently extracted by distributing the fine particles of the soil to liquid side.

The substep (b-2) is to coagulate the extract "b-1" containing the heavy metal ion and fine particles of the soil so as to obtain the extract "b-2" containing the agglomerated particles and the heavy metal ion. The agglomerated particles are dispersed in the extract "b-2". Examples of the coagulant include PAC (aluminum polychloride) and polyacrylamide-based polymer coagulants.

The substep (b-3) is to carry out the solid-liquid separation of the extract "b-2" containing the agglomerated particles and the heavy metal ion so as to obtain solid matter consisting of agglomerated particles and the extract "b" containing the heavy metal ion. In this substep, the solid-liquid separation of the extract "b-2" is carried out by supplying the extract "b-2" to a sedimentation apparatus and leaving it as it is for a predetermined period of time. The separated solid is, for example, returned into the extract "a" in the above substep (b-1) to be subjected to solid-liquid separation in the above substep so as to be discharged as cleaned soil. The extract "b" containing the heavy metal ion is supplied to the subsequent precipitation step.

### (precipitation step)

This step is to obtain an extract "c" containing iron and heavy metal precipitates by adjusting the pH of the extract "b" to 3 or more in the presence of an iron ion to precipitate the heavy metal together with iron.

When iron is contained in the contaminated soil, as an extracted iron ion is existent in the extract "b", iron precipitates as iron hydroxide by adjusting the pH of the extract "b" to 3 or more. At this point, the heavy metal other than iron co-precipitates.

Meanwhile, when iron is not contained in the contaminated soil or when iron is existent in an extremely small amount, iron chloride, iron nitrate, iron sulfate or iron acetate is added to the extract "b" to have an iron ion existent in the extract "b". The content of iron in the extract is preferably 100 to 5,000 mg/l, more preferably 200 to 1,000 mg/l.

To set the pH of the extract "b" to 3 or more, an alkali agent such as sodium hydroxide or potassium hydroxide is preferably added. The pH of the extract "b" is preferably set to 5 to 10. Thereby, most of the heavy metal contained in the extract "b" can be precipitated by making use of the coprecipitation effect of iron contained in the extract. As a result, the extract "c" containing iron and heavy metal precipitates can be obtained.

### (heavy metal recovery step)

The extract "c" is foamed in the presence of a surfactant to collect the iron and heavy metal precipitates by the formed bubbles so as to recover them.

Although the surfactant may be an organic compound having a hydrophilic group and a hydrophobic group in one molecular chain, the type of the surfactant is preferably selected according to the heavy metal to be extracted.

It is considered that the collection of the heavy metal by the surfactant is resulted by electrostatic interaction between the charge of the heavy metal existent in the extract and the charge of the surfactant. For example, as the iron precipitate has positive charge, when an anionic surfactant having negative charge such as sodium oleate is used, the heavy metal can be efficiently collected. Examples of the anionic surfactant include higher aliphatic soap, alkyl sulfuric acid ester salts and polyoxyethylene alkyl ether sulfates. Out of these, alkali metal salts of aliphatic carboxylic acid and alkali metal salts of alkylbenzenesulfonic acid are preferred.

When a dissolved heavy metal such as a metal complex is contained in the extract "c", it is preferably collected by the formed bubbles to be recovered. For example, antimony dissolved in a hydrochloric acid aqueous solution forms a chloro-complex of antimony. Since the chloro-complex has negative charge, when a cationic surfactant having positive charge is used, antimony can be efficiently collected by the surfactant. Examples of the cationic surfactant include alkyl trimethylammonium chloride, dialkyl dimethylammonium chloride, benzalkonium chloride and cyclohexyl pyrridinium chloride.

When a surfactant having an amino group is used for a heavy metal apt to form a chelate such as cadmium, the heavy metal can be collected by the surfactant due to coordinate bonding between a pair of the non-covalent bonded electrons of nitrogen of an amine and the heavy metal. Examples of the surfactant having an amino group include N-palmalkyl-1,3-diaminopropane and palm alkylamine nitrate.

Foaming is preferably carried out by gas filling and/or stirring. When a gas is used for foaming, air is preferably used because the running cost can be reduced. A foaming agent may also be used. Examples of the foaming agent include sodium salts of dioctylsulfosuccinate and sodium dodecylsulfate.

The optimum amount of the surfactant, the optimum flow rate of the gas and the optimum treating time may be suitably selected according to the type of the heavy metal, the content of the heavy metal in the extract and the required removal rate of the heavy metal.

The formed bubbles can be collected by overflowing, scraping or vacuum suction, and the iron precipitate and the heavy metal which was contained in the extract are contained in the bubbles. A water phase existent below the bubbles are returned to the solid-liquid separation step as wash water and discharged as effluent.

### <first embodiment>

The first embodiment of the present invention will be described hereinunder. Fig. 1 is a schematic diagram of the first embodiment of the present invention.

### (extraction step)

The contaminated soil to be treated is supplied into an extractor (1 in Fig. 1) through a route (5 in Fig. 1). In the extractor, after an extracting reagent (A in Fig. 1) is added to the soil, a heavy metal ion is extracted from soil particles by stirring or shaking.

### (solid-liquid separation step)

After the heavy metal ion is extracted in the extractor, the solid is separated in a solid-liquid separator (2 in Fig. 1) through a route (6 in Fig. 1). Soil whose heavy metal content has been greatly reduced by extraction is discharged as cleaned soil through a route (7 in Fig. 1).

Meanwhile, the extract "b" containing the heavy metal ion separated in the solid-liquid separator (2 in Fig. 1) is supplied into a pH modifier (3 in Fig. 1) through a route (8 in Fig. 1).

### (precipitation step)

In the pH modifier, an alkali agent such as sodium hydroxide or potassium hydroxide (B in Fig. 1) is added to change the pH of the extract to 3.0 or more. Thereby, most of the heavy metal contained in the extract is precipitated by making use of the coprecipitation effect of iron contained in the extract.

The extract "c" containing iron and heavy metal precipitates and a dissolved heavy metal is supplied to a flotation apparatus (4 in Fig. 1) through a route (9 in Fig. 1).

### (heavy metal recovery step)

In the flotation apparatus, a surfactant (C in Fig. 1) is added to the extract "c" to foam the extract "c" by gas filling (D in Fig. 1) and/or stirring so as to adsorb the iron and heavy metal precipitates and the dissolved heavy metal to bubbles. Thereafter, the formed bubbles are collected by overflowing, scraping or vacuum suction to recover the heavy metal through a route (10 in Fig. 1). Effluent from the flotation apparatus is discharged trough a route (11 in Fig. 1).

### <second embodiment>

The second embodiment of the present invention will be described in detail hereinunder with reference to Fig. 2.

### (extraction step)

In this embodiment, soil containing a heavy metal is first supplied into an extractor (21 in Fig. 2) as it is or after it is ground into fine particles by a grinder. After an extracting reagent is added to the contaminated soil in the extractor, the heavy metal is extracted from soil particles by stirring or shaking to obtain the extract "a".

### (solid-liquid separation step)

Thereafter, the solid-liquid separation of the extract "a" is carried out by a solid-liquid separator (22 in Fig. 2). To this end, the mesh of the filter is adjusted and the fine particles are distributed to liquid side to obtain the extract "b-1" . The cleaned soil is preferably subjected to re-cleaning and solid-liquid separation repeatedly by a solid-liquid separator (23 in Fig. 2) in order to further recover the heavy metal ion in the residual liquid contained in the soil. A cleaned liquid from the solid-liquid separator (23 in Fig. 2) is supplied into an effluent treating apparatus (26 in Fig. 2) consisting of a pH modifier and a flotation apparatus to remove the heavy metal and re-used as a recycled cleaned liquid. The soil which has been re-cleaned to reduce its content of the heavy metal to a desired value is discharged as cleaned soil.

The extract "b-1" containing the heavy metal ion and fine particles separated by the solid-liquid separator (22 in Fig. 2) is supplied into a coagulator (24 in Fig. 2). In the coagulator, a coagulant (PAC, etc.) is added to agglomerate the fine particles so as to obtain the extract "b-2" containing the agglomerated particles dispersed therein. The extract "b-2" is supplied into a sedimentation apparatus (25 in Fig. 2). The extract "b-2" is left as it is for a predetermined period of time in the sedimentation apparatus and the settled agglomerated fine particles are returned to the solid-liquid separator (22 in Fig. 2).

Meanwhile, the extract "b" containing the heavy metal ion separated in the sedimentation apparatus (25 in Fig. 2) is supplied into the effluent treating apparatus (26 in Fig. 2) consisting of the pH modifier and the flotation apparatus.

### (precipitation step)

The pH of the extract "b" supplied into the pH modifier is adjusted to 3 or more by an alkali agent to precipitate the heavy metal together with iron in order to obtain the extract "c". The extract "c" is supplied into the flotation apparatus.

### (heavy metal recovery step)

In the flotation apparatus, the extract "c" is foamed in the presence of a surfactant to collect iron and heavy metal precipitates by bubbles. The liquid phase below the bubbles is recycled to the solid-liquid separator (23 in Fig. 2) as a cleaned liquid and discharged as effluent.

### Examples

The following examples are provided for the purpose of further illustrating the present invention but are in no way to be taken as limiting.

The content of a heavy metal in soil shown in Examples was obtained by drying the soil, decomposing it by heating with sulfuric acid-hydrofluoric acid, dissolving it in water, measuring the heavy metal contained in the obtained aqueous solution with an atomic absorption photometer (Z-8100 of Hitachi, Ltd.) and calculating the content of the heavy metal in soil from the obtained value.

The content of the heavy metal in the solution was also obtained with an atomic absorption photometer.

### <Example 1>

### (extraction step)

25 g of a 0.1 N aqueous solution of hydrochloric acid was added to 5 g of contaminated soil containing 282 mg/kg. of cadmium and 13, 850 mg/kg of iron and shaken for 30 minutes to obtain an extract "a".

### (solid-liquid separation step)

The extract "a" was filtered in vacuum with a Nutsche flask to obtain cleaned soil and an extract "b". The separated extract "b" weighed 18.9 g and contained 53.4 mg/l of cadmium and 840 mg/l of iron, which means that 71.6 wt% and 22.9 wt% of the initial amounts of cadmium and iron contained in the soil were removed, respectively.

### (precipitation step)

The pH of the extract "b" was adjusted to 6.0 with a 5 wt% aqueous solution of sodium hydroxide to obtain an extract "c" containing precipitates.

### (heavy metal recovery step)

0.01 g of sodium oleate (guaranteed reagent of Wako Pure Chemical Industries, Ltd.) and 0.02 g of N-palm-alkyl-1,3-diaminopropane (guaranteed reagent of Wako Pure Chemical Industries, Ltd.) were added as surfactants to the extract "c" containing precipitates and air was blown into the extract "c" at a flow rate of 20 ml/min to foam the extract "c".

After 30 minutes of air blowing, the content of cadmium in the effluent was 0.59 mg/l and the content of iron was 0.23 mg/l, which means that 70.8 wt% and 22.9 wt% of the initial amounts of cadmium and iron contained in the soil could be recovered as bubbles, respectively.

### <Example 2>

### (extraction step)

The treating method of the present invention was made on heavy metal contaminated soil (to be referred to as "soil A" hereinafter) in the district A. The soil A contained 293 mg/kg of cadmium and 13,800 mg/kg of iron. 20 g of a 0.1 N aqueous solution of hydrochloric acid was added to 5 g of the soil A and shaken for 30 minutes to obtain an extract "a".

### (solid-liquid separation step)

Thereafter, the extract "a" was filtered in vacuum with a Nutsche flask to obtain cleaned soil A¹ and an extract. 13.8 g of the separated extract contained 69 mg/l of cadmium, that is, 65 wt% of the initial amount of cadmium contained in the soil A was extracted. A cleaning liquid "w" which will be described hereinafter was added to this extract to prepare an extract "b".

After the obtained soil A¹ was cleaned with 30 g of 0.1 N hydrochloric acid, the resulting soil was filtered in vacuum with a Nutsche flask to separate it into soil A² and the cleaning liquid "w". The separated cleaning liquid "w" weighed 28.9 g and contained 14.8 mg/l of cadmium, which means that 29 wt% of the initial amount of cadmium contained in the soil A was extracted. Further, the soil A² was rinsed with water, and sodium hydroxide was added to adjust the pH of the soil to 7 so as to obtain cleaned soil A³. A heavy metal elution test was made on the obtained soil A³ in accordance with the method specified by the Notice No. 46 of the Environment Agency (August 23, 1991). That is, a specimen (unit: g) and a solvent (hydrochloric acid was added to pure water to adjust its pH to 5.8 to 6.3) (unit: ml) were mixed together in a weight volume ratio of 10 % so as to obtain 500 ml or more of the mixed solution. This mixed solution was shaken at normal temperature and normal pressure by a shaking apparatus (200 times of shaking per minute, shaking width of 4 to 5 cm) for 6 hours. After shaking, the solution was centrifuged at 3,000 rpm for 20 minuets to filter its supernatant with a membrane filter having pore size of 0.45 µm to prepare a sample. The amount of the heavy metal eluted from the specimen was measured. As a result, the amount of cadmium eluted was smaller than 0.005 mg/l which satisfied the environmental standard value of 0.01 mg/l or less.

### (precipitation step)

The pH of the extract "b" obtained in the solid-liquid separation step was adjusted to 7 with 10 % sodium hydroxide to obtain an extract "c" containing precipitates.

### (heavy metal recovery step)

25 ml of the extract "c" was injected into a reactor having a capacity of 50 ml, 0. 01 g of sodium oleate (guaranteed reagent of Wako Pure Chemical Industries, Ltd.) and 0.02 g of N-palm-alkyl-1,3-diaminopropane (guaranteed reagent of Wako Pure Chemical Industries, Ltd.) were added as surfactants to the extract "c", and air was supplied into the reactor at a flow rate of 20 ml/min to foam the mixture. After 30 minutes, the content of cadmium in the effluent was 0.03 mg/l.

### <Example 3>

### (extraction step)

The treating method of the present invention was made on the heavy metal contaminated soil of the district B (to be referred to as "soil B" hereinafter) . The soil B contained 4 mg/kg of arsenic, 21 mg/kg of all chromium's, 265 mg/kg of lead and 14,040 mg/kg of iron. 25 mg of a 4N aqueous solution of hydrochloric acid was added to 5 g of the soil B and shaken for 30 minutes to obtain an extract "a".

### (solid-liquid separation)

The extract "a" was filtered in vacuum with a Nutsche flask to obtain cleaned soil B¹ and an extract. The separated extract weighed 23.2 g and contained 0.8 mg/l of arsenic, 3.9 mg/l of all chromium's and 56.4 mg/l of lead, which means that 93 wt%, 86 wt% and 99 wt% of the initial amounts of arsenic, all chromium's and lead contained in the soil were extracted. A cleaning liquid "w" which will be described hereinafter was added to this extract to prepare an extract "b".

The cleaned soil B¹ was further cleaned with 50 g of a 1 N aqueous solution of hydrochloric acid and filtered in vacuum with a Nutsche flask to obtain cleaned soil B² and a cleaning liquid "w". The separated cleaning liquid "w" weighed 46.6 g and contained 0.01 mg/l of arsenic, 0.17 mg/l of all chromium's and 0.11 mg/l of lead, which means that 2. 3 wt%, 7. 5 wt% and 0.39 wt% of the initial amounts of arsenic, all chromium's and lead contained in the soil were extracted. The pH of the soil B² was adjusted to 7 with sodium hydroxide to obtain cleaned soil B³. A heavy metal elution test was made on the cleaned soil B³ in accordance with the method specified in the Notice No. 46 of the Environment Agency (August 23, 1991). The amount of arsenic eluted was smaller than 0.005 mg/l which satisfied the environmental standard value of 0.01 mg/l or less, and the amount of all chromium's eluted was smaller than 0.005 mg/l which satisfied the hexavalent chromium environmental standard value of 0.05 mg/l or less. The amount of lead eluted was smaller than 0.005 mg/l which satisfied the environmental standard value of 0.01 mg/l or less.

### (precipitation step)

10 % sodium hydroxide was added to the extract "b" obtained in the solid-liquid separation step to adjust the pH of the extract "b" to 7 so as to obtain an extract "c" containing an iron precipitate.

### (heavy metal recovery step)

25 ml of the extract "c" was injected into a reactor having a capacity of 50 ml, 0.01 g of sodium oleate (guaranteed reagent of Wako Pure Chemical Industries, Ltd.) and 0.02 g of sodium dodecylsulfate (guaranteed reagent of Wako Pure Chemical Industries, Ltd.) were added as surfactants to the extract "c" , and air was supplied into the reactor at a flow rate of 20 ml/min to foam the mixture. After 30 minutes, the content of arsenic in the effluent was lower than 0.05 mg/l, the content of all chromium's was lower than 0.1 mg/l, and the content of lead was lower than 0.05 mg/l.

### <Example 4>

The same extraction procedure as in Example 3 was repeated except that soil containing 200 mg/kg of antimony and 12,070 mg/kg of iron was used. The extract "b" after solid-liquid separation weighed 21.5 g and contained 40.7 mg/l of antimony, which means that 87.5 wt% of the initial amount of antimony contained in the soil was extracted. In the heavy metal recovery step, the same procedure was repeated except that palm-alkylamine nitrate was used in place of sodium dodecylsulfate. The content of antimony in the effluent after the treatment was 0.02 mg/l.

### Effect of the Invention

According to the present invention, a heavy metal can be removed from soil containing the heavy metal efficiently without the need of a large-scale apparatus. Therefore, the present invention is of great industrial significance. The amount of a heavy metal eluted from the obtained cleaned soil is very small and satisfies the environmental standard. According to the present invention, the content of a heavy metal in the effluent from the process is low and satisfies the environmental standard.

### Industrial Feasibility

The present invention is expected to be used in the construction industry and land development industry which need the cleaning of contaminated soil. A shortage of controlled landfill for industrial waste is now called in question. The treating method of the present invention eliminates the need of abandoning soil and makes it possible to bury it back as soil which satisfies the requirement and reuse it for various purposes. As a result, the total treatment cost can be cut drastically.

## Claims

1. A process for cleaning contaminated soil containing a heavy metal, comprising:
(a) an extraction step where extracting the heavy metal contained in the soil as a heavy metal ion by bringing an extracting reagent into contact with the soil to obtain an extract "a" containing soil and the heavy metal ion;
(b) a solid-liquid separation step where carrying out the solid-liquid separation of the extract "a" to obtain cleaned soil and an extract "b" containing the heavy metal ion;
(c) a precipitation step where adjusting the pH of the extract "b" to 3 or more in the presence of an iron ion to precipitate the heavy metal together with ion so as to obtain an extract "c" containing iron and heavy metal precipitates; and
(d) a heavy metal recovery step where foaming the extract "c" in the presence of a surfactant and collecting the iron and heavy metal precipitates by bubbles to recover them.

2. The process for cleaning soil according to claim 1, wherein a dissolved heavy metal in the extract "c" is collected by the formed bubbles in the heavy metal recovery step to recover it.

3. The process for cleaning soil according to claim 2, wherein the dissolved heavy metal is a metal complex.

4. The process for cleaning soil according to claim 1, wherein the contaminated soil contains at least one heavy metal selected from the group consisting of cadmium, copper, antimony, lead, arsenic, chromium, mercury and zinc.

5. The process for cleaning soil according to claim 4, wherein the contaminated soil contains iron.

6. The process for cleaning soil according to claim 1, wherein the extracting reagent is an aqueous solution of hydrochloric acid.

7. The process for cleaning soil according to claim 1, wherein at least one selected from the group consisting of iron chloride, iron nitrate, iron sulfate and iron acetate is added to the extract "b" in the precipitation step to have an iron ion existent in the extract "b" , and then the pH of the extract "b" is adjusted to 3 or more.

8. The process for cleaning soil according to claim 1, wherein an alkali agent is added to the extract "b" to adjust its pH to 3 or more in the precipitation step.

9. The process for cleaning soil according to claim 8, wherein the alkali agent is sodium hydroxide and/or potassium hydroxide.

10. The process for cleaning soil according to claim 1, wherein the surfactant is an anionic surfactant and/or a cationic surfactant.

11. The process for cleaning soil according to claim 1, wherein a foaming agent is used in combination with the surfactant in the heavy metal recovery step.

12. The process for cleaning soil according to claim 1, wherein the solid-liquid separation step comprises the following substeps:
(b-1) carrying out the solid-liquid separation of the extract "a" so as to obtain cleaned soil and an extract "b-1" containing the heavy metal ion and fine particles of the soil;
(b-2) coagulating the extract "b-1" to obtain an extract "b-2" containing agglomerated particles and the heavy metal ion; and
(b-3) carrying out the solid-liquid separation of the extract "b-2" so as to obtain solid matter comprising agglomerated particles and the extract "b" containing the heavy metal ion.

13. The process for cleaning soil according to claim 12, wherein the particle diameter of fine particles of the soil contained in the extract "b-1" is 100 µm or less.

14. The process for cleaning soil according to claim 12, wherein the solid matter separated in the substep (b-3) is returned into the extract "a" in the substep (b-1).
